(19)

**Europäisches Patentamt**
**European Patent Office**
**Office européen des brevets**

(11) **EP 4 592 163 A1**

(12) **EUROPEAN PATENT APPLICATION**

(43) Date of publication:
**30.07.2025 Bulletin 2025/31**

(21) Application number: **25152775.0**

(22) Date of filing: **20.01.2025**

(51) International Patent Classification (IPC):
*B62D 5/00* (2006.01)    *B62D 1/22* (2006.01)
*B62D 5/04* (2006.01)    *B62D 6/00* (2006.01)
*A63F 13/803* (2014.01)    *B60W 50/08* (2020.01)

(52) Cooperative Patent Classification (CPC):
**B60W 50/082; A63F 13/245; A63F 13/803;**
**B62D 15/025;** B60W 2040/0809; B60W 2510/20;
B60W 2710/202; B62D 6/007

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.01.2024 JP 2024010028**

(71) Applicant: **TOYOTA JIDOSHA KABUSHIKI**
**KAISHA**
**Aichi-ken, 471-8571 (JP)**

(72) Inventors:
• **IIDA, Kazuaki**
**Toyota-shi, 471-8571 (JP)**
• **KUDO, Yoshio**
**Toyota-shi, 471-8571 (JP)**

(74) Representative: **J A Kemp LLP**
**80 Turnmill Street**
**London EC1M 5QU (GB)**

(54) **STEERING SYSTEM**

(57)    A steering system (10) includes an operation device (11), a turning device (12), and a controller (13, 14). The controller (13, 14) has control states including a main control state, a sub-control state, and a stop state, and is configured to make a state transition of the control state between the main control state, the sub-control state, and the stop state. The steering system (10) further includes a state transition permission unit (15).

FIG. 1

**Description**

BACKGROUND OF THE INVENTION

1. Field of the Invention

The present disclosure relates to a steering system.

2. Description of Related Art

In the related art, for example, a game device disclosed in Japanese Unexamined Patent Application Publication No. 2007-330312 (JP 2007-330312 A) is known. The game device in the related art includes a terminal for inputting information corresponding to an operation amount of a steering wheel or the like that is mounted on an actual vehicle capable of traveling and that is used for a driving operation, and is configured to generate an image to be displayed on a display and a sound effect to be output from a speaker based on the information corresponding to the operation amount of the steering wheel or the like used for the driving operation input via the terminal and to execute a game based on the driving operation.

SUMMARY OF THE INVENTION

In the game device of the related art, when a user provides an instruction to start a game, the game is executed using the steering wheel in a case where the vehicle is in a non-travel state. Incidentally, in a steering system of the vehicle, when a state transition is enabled between a main control state in which turning wheels are turned to make vehicle travel and a sub-control state in which the game is provided using the steering wheel, consideration of the state transition of the control state is needed to maintain safety in the vehicle.

The present disclosure provides a steering system capable of maintaining safety of a vehicle when a state transition of a control state is performed.

A steering system according to an aspect of the present disclosure includes an operation device, a turning device, and a controller. The operation device includes an operation member and is configured to generate a reaction force to an operation of the operation member and apply the reaction force to the operation member. The turning device is configured to turn turning wheels of the vehicle when mechanical connection with the operation device is released. The controller is configured to realize a turning operation of the turning wheels through the turning device in response to the operation of the operation member. The controller has control states including a main control state in which the operation device and the turning device are controlled to synchronize the operation of the operation member and the turning operation with each other, a sub-control state in which at least the operation device is controlled not to synchronize the operation of the operation member and the turning operation with each other, and a stop state in which operations of the operation device and the turning device are stopped, and is configured to make a state transition of the control state between the main control state, the sub-control state, and the stop state. The steering system further includes a state transition permission section. The state transition permission section is configured to, when executing the state transition, determine whether a predetermined state transition condition related to safety of the vehicle is satisfied and permit the state transition in a case where the state transition condition is satisfied.

In the aspect of the present disclosure, the state transition condition may include at least a vehicle-related condition related to a state of the vehicle.

In the aspect of the present disclosure, the vehicle-related condition may include a condition for determining at least one state of a stop state of the vehicle, a communication state via a communication line established in the vehicle, an operation state of the operation device, and an operation state of the turning device.

In the aspect of the present disclosure, in a case where the vehicle is an electric vehicle that needs charging of a battery for driving an electric motor, the vehicle-related condition may include a condition for determining a charge state of the battery.

In the aspect of the present disclosure, the state transition condition may include an authentication condition for authenticating a specific user who instructs the controller to execute the state transition.

In the aspect of the present disclosure, the authentication condition may include an administrator authentication condition for authenticating an administrator who manages the vehicle among the specific users.

In the aspect of the present disclosure, the authentication condition may include a permitted user authentication condition for authenticating a permitted user who is permitted by the administrator among the specific users.

In the aspect of the present disclosure, the state transition condition may include a stop condition for stopping the operation of the operation device in the sub-control state.

In the aspect of the present disclosure, the stop condition may include an abnormality determination condition for determining that an abnormality has occurred in a state of the vehicle.

In the aspect of the present disclosure, the stop condition may include a cut-off determination condition for determining that a power supply of the vehicle has been cut off.

In the aspect of the present disclosure, the state transition permission section may be configured to, when determining whether to permit the state transition, determine whether a system constituting the vehicle is normal in addition to determining whether the state transition condition is satisfied.

In the aspect of the present disclosure, the vehicle may be an electric vehicle that needs charging of a battery for driving an electric motor, and the controller may be configured to, while the battery is being charged, execute the state transition from the main control state to the sub-control state in a case where the state transition is permitted by the state transition permission section as a result of the satisfaction of the state transition condition.

In the aspect of the present disclosure, the controller may be configured to, in a case where there is a difference between an operation position of the operation member operated in the sub-control state and a turning position associated with the turning operation of the turning wheels when executing the state transition from the sub-control state to the main control state in response to the permission through the state transition permission section, execute positioning control to match the operation position with the turning position.

In the aspect of the present disclosure, the controller may be configured to, in the positioning control, operate the operation device to generate the reaction force on the operation member to match the operation position with the turning position.

In the aspect of the present disclosure, the controller may be configured to provide entertainment using the operation member in the vehicle in the sub-control state.

In the aspect of the present disclosure, the entertainment may be a game in which equipment including the operation member and mounted on the vehicle is operated to issue an instruction to operate a virtual moving body.

According to the aspect of the present disclosure, the steering system can make a transition of the control state of the controller when the state transition permission section determines that the state transition condition is satisfied and permits the state transition. As a result, the steering system can maintain the safety of the vehicle when performing a state transition between the main control state and the sub-control state.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic configuration diagram of a vehicle;

FIG. 2 is a functional block diagram of a state transition permission unit (state transition permission section);

FIG. 3 is a diagram for describing a state transition;

FIG. 4 is a diagram for describing processing performed by an authentication determination unit of FIG. 2;

FIG. 5 is a diagram for describing processing performed by a sub-control state transition permission determination unit of FIG. 2;

FIG. 6 is a diagram for describing processing performed by a sub-control state end determination unit of FIG. 2; and

FIG. 7 is a diagram for describing processing performed by a main control state transition permission determination unit of FIG. 2.

DETAILED DESCRIPTION OF EMBODIMENTS

Hereinafter, a steering system 10 according to an embodiment of the present disclosure will be described in detail with reference to the drawings. The present disclosure can be carried out in various forms in which various modifications and improvements are made based on the knowledge of those skilled in the art in addition to the following embodiment.

1. Configuration of Vehicle 1 to which Steering System 10 is Applied

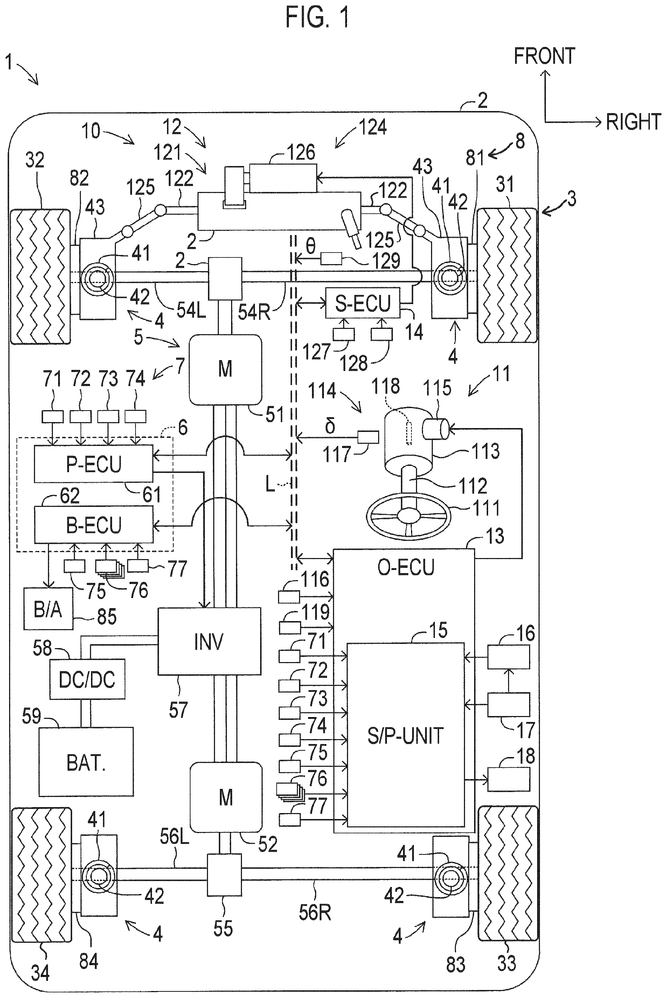

In the present embodiment, the steering system 10 is applied to a vehicle 1 shown in FIG. 1. The vehicle 1 includes a vehicle body 2, wheels 3 disposed on front, rear, right, and left sides, and a suspension unit 4 that supports the vehicle body 2 and each of the wheels 3. The wheels 3 are composed of a right front wheel 31, a left front wheel 32, a right rear wheel 33, and a left rear wheel 34. The suspension unit 4 is an independent suspension unit disposed corresponding to each of the wheels 3, and includes, for example, a coil spring 41 and a hydraulic shock absorber 42. The suspension unit 4 may be, for example, an air suspension unit including an air spring.

The vehicle 1 includes a drive system 5 that generates and transmits a driving force needed for traveling. The drive system 5 includes a front motor 51 and a rear motor 52 as electric motors. The front motor 51 drives the right front wheel 31 and the left front wheel 32 by transmitting rotation of an output shaft to front wheel axles 54R, 54L on right and left sides via a differential gear 53 (including a reduction gear). The rear motor 52 drives the right rear wheel 33 and the left rear wheel 34 by transmitting rotation of an output shaft to rear wheel axles 56R, 56L on the right and left sides via a differential gear 55 (including a reduction gear). That is, in the present embodiment, a four-wheel drive electric vehicle (EV) is exemplified as the vehicle 1.

The drive system 5 includes an inverter 57, a DC/DC converter 58, and a battery 59. As a result, the front motor 51 and the rear motor 52 can be driven independently to perform forward rotation in a forward direction of the vehicle 1 and reverse rotation in a backward direction of the vehicle 1 through energization control of the inverter 57.

The inverter 57 includes a charging port (not shown) and has, for example, a charging function of converting an alternating current supplied from a charging facility into a direct current to charge the battery 59 via the DC/DC converter 58. Further, the inverter 57 also has a function of, for example, converting an alternating current generated by the rear motor 52 into a direct current to charge the battery 59 via the DC/DC converter 58, that is, to store regenerative energy.

An operation of the front motor 51 and the rear motor 52 is controlled by a drive electronic control unit 61 (hereinafter, may be simply referred to as a "drive ECU 61") that constitutes a braking/driving controller 6. The drive ECU 61 is an electric control unit that includes a microcomputer including a central processing unit (CPU), a read only memory (ROM), a random access memory (RAM), and various interfaces as its main component. In FIG. 1, the drive ECU 61 is indicated as "P-ECU 61".

The CPU sequentially executes a predetermined program to read data, to execute numerical calculation, and to output a calculation result. The ROM stores a program, a map, or the like executed by the CPU. The RAM temporarily stores data or the like. The various interfaces are connected to a communication line L. Examples of the communication line L include a car area network or controllable area network (CAN) and a dedicated communication line other than the CAN.

The drive ECU 61 receives a detection signal Sa from an accelerator sensor 71 of a sensor group 7 that detects an accelerator operation amount, and calculates a driver-requested driving force according to the accelerator operation amount. The drive ECU 61 controls the front motor 51 and the rear motor 52 to transmit a front wheel target driving force and a rear wheel target driving force that are obtained by distributing the calculated driver-requested driving force to the front wheel side and the rear wheel side to the right front wheel 31 and the left front wheel 32, and the right rear wheel 33 and the left rear wheel 34, respectively.

In addition, the drive ECU 61 receives, for example, a detection signal Smf output from a control sensor 72 of the front motor 51, and controls the operation of the inverter 57 to control the energization of the front motor 51. Similarly, the drive ECU 61 receives a detection signal Smr output from a control sensor 73 of the rear motor 52, and controls the operation of the inverter 57 to control the energization of the rear motor 52.

Further, the drive ECU 61 acquires an operation position of a shift lever or a shift switch (not shown) that is operated when the vehicle 1 is moved forward or backward, or parked. Therefore, the drive ECU 61 receives a detection signal Ssp representing the operation position output from a shift position sensor 74 of the sensor group 7.

The vehicle 1 includes a brake system 8 that generates a braking force needed for braking. The brake system 8 includes a right front wheel brake 81, a left front wheel brake 82, a right rear wheel brake 83, a left rear wheel brake 84, and a brake actuator 85. In FIG. 1, the brake actuator 85 is indicated as "B/A 85".

Although not shown, each of the right front wheel brake 81, the left front wheel brake 82, the right rear wheel brake 83, and the left rear wheel brake 84 includes a brake disc that rotates integrally with the wheels 3, a pair of brake pads that presses the brake disc from both sides, and a brake caliper to which the brake pads are fixed. The brake caliper is connected to the brake actuator 85 via a brake pipe (not shown), and a hydraulic pressure circuit of hydraulic oil is formed between the brake actuator 85 and each of the right front wheel brake 81, the left front wheel brake 82, the right rear wheel brake 83, the left rear wheel brake 84. Therefore, in the brake system 8, when the brake actuator 85 pressurizes the hydraulic oil, the brake pads press the brake disc, and as a result, a frictional force, that is, the braking force is generated.

The brake actuator 85 is configured to include a reservoir tank that stores the hydraulic oil and a master cylinder, a pump, or the like that pressurizes the hydraulic oil. The reservoir tank, the master cylinder, and the pump are not shown. The control of the brake actuator 85 is executed by a brake electronic control unit 62 (hereinafter, may be simply referred to as a "brake ECU 62") that constitutes the braking/driving controller 6. That is, the brake actuator 85 adjusts a pressure of the hydraulic oil applied to each of the right front wheel brake 81, the left front wheel brake 82, the right rear wheel brake 83, and the left rear wheel brake 84 under the control of the brake ECU 62. As a result, the brake actuator 85 can cause each of the right front wheel brake 81, the left front wheel brake 82, the right rear wheel brake 83, and the left rear wheel brake 84 to generate the braking force.

The brake ECU 62 is an electric control unit that includes a microcomputer including a CPU, a ROM, a RAM, and various interfaces as its main component. The brake ECU 62 is connected to the communication line L via the various interfaces. In FIG. 1, the brake ECU 62 is indicated as "B-ECU 62".

The brake ECU 62 is connected to a hydraulic sensor, various control valves, a pump, and the like (not shown) that are provided in the brake actuator 85. In addition, the brake ECU 62 is connected to a brake sensor 75 of the sensor group 7 that detects a brake operation amount by the driver from a depression amount of a brake pedal (not shown), four wheel speed sensors 76 that respectively detect wheel speeds of the wheels 3, and a parking brake sensor 77. The four wheel speed sensors 76 respectively output a detection signal Swv1 representing the wheel speed of the right front wheel 31, a detection signal Swv2 representing the wheel speed of the left front wheel 32, a detection signal Swv3 representing the wheel speed of the right rear wheel 33, and a detection signal Swv4 representing the wheel speed of the left rear wheel 34.

The brake ECU 62 receives a detection signal Sb from the brake sensor 75 to calculate a driver-requested braking force corresponding to the brake operation amount. Then, the brake ECU 62 calculates a frictional braking force to be generated in each of the right front wheel brake 81, the left front wheel brake 82, the right rear wheel brake 83, and the left rear wheel brake 84, and a regenerative braking force to be generated in the rear motor 52, so as to realize the driver-requested braking force.

Here, the brake ECU 62 controls the operation of the brake actuator 85 based on the detection signals Swv1, Swv2, Swv3, and Swv4 from the wheel speed sensors 76 to generate the calculated frictional braking force. As a result, the brake actuator 85 pressurizes the hydraulic oil and supplies the pressurized hydraulic oil to each of the right front wheel brake 81, the left front wheel brake 82, the right rear wheel brake 83, and the left rear wheel brake 84. As a result, the brake pads in each of the right front wheel brake 81, the left front wheel brake 82, the right rear wheel brake 83, and the left rear wheel brake 84 press the brake disc, and the braking force is applied to each wheel 3.

The brake ECU 62 transmits information representing the calculated regenerative braking force to the drive ECU 61. As a result, when the drive ECU 61 receives a regenerative brake command transmitted from the brake ECU 62, the drive ECU 61 outputs, to the inverter 57, a control signal generated so that the requested regenerative braking force is applied to the right rear wheel 33 and the left rear wheel 34. As a result, a duty ratio of a switching element of the inverter 57 is controlled, a current corresponding to the regenerative braking force flows from the rear motor 52 to the battery 59 via the DC/DC converter 58, and the braking force is applied to the right rear wheel 33 and the left rear wheel 34.

Further, the brake ECU 62 operates a well-known parking brake device (not shown) in a state where the vehicle 1 is stopped based on the detection signals Swv1, Swv2, Swv3, and Swv4 from the wheel speed sensors 76. When the parking brake device is operated to apply the braking force to the wheels 3 (for example, the right rear wheel 33 and the left rear wheel 34), the brake ECU 62 receives a detection signal Spb that is output from the parking brake sensor 77 and that represents a state in which the parking brake device is applying the braking force.

2. Configuration of Steering System 10

In the present embodiment, the steering system 10 mounted on the vehicle 1 turns the right front wheel 31 and the left front wheel 32 as turning wheels. The steering system 10 is a steer-by-wire type including an operation device 11 and a turning device 12 that are mechanically independent of each other.

The operation device 11 mainly includes a steering wheel 111, a steering shaft 112, a steering column 113, and a reaction force applying mechanism 114. The steering wheel 111 is an operation member operated (steered) by a driver who is an administrator authenticated as described below and by a permitted user who is authenticated as described below. The steering wheel 111 is attached to a tip of the steering shaft 112, and the steering shaft 112 is rotatably supported by the steering column 113. The steering column 113 is supported by an instrument panel reinforcement (not shown).

The reaction force applying mechanism 114 uses a reaction force motor 115 as a driving force source and applies a reaction force Fc (strictly, a "reaction force torque", but hereinafter referred to as an "operation reaction force Fc") to the steering operation to the steering wheel 111 via the steering shaft 112. As the reaction force motor 115, for example, a three-phase brushless DC motor can be used. Here, the reaction force motor 115 includes its own motor rotation angle sensor 116 that detects a motor rotation angle $\omega$ within one rotation, for switching an energization phase in the power supply to the reaction force motor 115. Since the reaction force applying mechanism 114 has a general structure including a reducer or the like, the specific structure is not described.

The operation device 11 includes an operation angle sensor 117 that detects an operation angle $\delta$ representing an operation position of the steering wheel 111. Here, in a case where a position of the steering wheel 111 in a straight traveling state of the vehicle 1 is set as a neutral position, a rotation angle from the neutral position in each of right and left directions is the operation angle $\delta$ of the steering wheel 111.

The operation device 11 includes a torsion bar 118 incorporated in the steering shaft 112, as in a so-called general power steering system. The operation device 11 includes an operation torque sensor 119 that detects an operation torque To as an operation force applied to the steering wheel 111 by the driver based on a torsion amount of the torsion bar 118.

The turning device 12 integrally turns the right front wheel 31 and the left front wheel 32 turnable supported by the vehicle body 2 by rotating a steering knuckle 43 that constitutes the suspension unit 4. The turning device 12 includes a turning actuator 121 as a main component.

The turning actuator 121 mainly includes a steering rod 122, a housing 123, and a rod moving mechanism 124. Both ends of the steering rod 122 are connected to the steering knuckles 43 on the right and left sides, respectively, via a tie rod 125. The housing 123 is fixed to the vehicle body 2 and supports the steering rod 122 to be movable in the right and left directions.

The rod moving mechanism 124 moves the steering rod 122 in the right and left directions using a turning motor 126 as a driving force source. An example of the rod moving mechanism 124 is a ball screw mechanism that mainly includes a ball groove (not shown) provided in the steering rod 122 and a nut (not shown) that is screwed into the ball groove via a bearing hole (not shown) and that is rotated by the turning motor 126.

Since the ball screw mechanism has a general structure, the specific structure of the rod moving mechanism 124 is not described. The structure of the rod moving mechanism 124 is not limited to the ball screw mechanism, and other mechanisms may also be used.

Here, similarly to the reaction force motor 115, as the turning motor 126, for example, a three-phase brushless DC motor can be used. The turning motor 126 also includes its own motor rotation angle sensor 127 that detects a motor rotation angle v within one rotation, for switching the energization phase in the power supply to the turning motor 126. In addition, the turning motor 126 includes its own current sensor 128 for detecting a current I (hereinafter, may be referred to as a "turning current I") actually supplied to the turning motor 126.

The turning device 12 includes a turning angle sensor 129 that detects a turning angle θ representing a turning position of the right front wheel 31 and the left front wheel 32 that are the turning wheels. Here, when a position of the steering rod 122 in the straight traveling state of the vehicle 1 is set as a neutral position, the amount of movement from the neutral position in the right and left directions is the turning angle θ of the right front wheel 31 and the left front wheel 32.

The control of the operation device 11, more specifically, the control of the operation reaction force Fc, that is, the control of the reaction force motor 115 of the operation device 11 is executed by an operation electronic control unit 13 (hereinafter, may be simply referred to as an "operation ECU 13"). The operation ECU 13 is an electric control unit that includes a microcomputer including a CPU, a ROM, a RAM, and various interfaces as its main component. The operation ECU 13 is connected to the communication line L via the various interfaces. In FIG. 1, the operation ECU 13 is indicated as "O-ECU 53".

The control of the turning device 12, more specifically, the control of the turning angle θ, that is, the control of the turning motor 126 of the turning device 12 is executed by a turning electronic control unit 14 (hereinafter, may be simply referred to as a "turning ECU 14"). The turning ECU 14 is an electric control unit that includes a microcomputer including a CPU, a ROM, a RAM, and various interfaces as its main component. The turning ECU 14 is connected to the communication line L via the various interfaces. In FIG. 1, the turning ECU 14 is indicated as "S-ECU 14".

Here, regarding the control of the steering system 10, turning control that is the control of the turning device 12 and reaction force control that is the control of the reaction force applying mechanism 114 of the operation device 11 will be described. First, the turning control will be described. The turning control is control of turning the right front wheel 31 and the left front wheel 32 in accordance with a turning request, that is, in accordance with the operation angle δ of the steering wheel 111 in a case of manual driving by the driver. The turning control is executed by cooperation between the operation ECU 13 in a main control state and the turning ECU 14, as described below.

In the steering system 10, the motor rotation angle ω of the reaction force motor 115 of the operation device 11 and the operation angle δ of the steering wheel 111 have a relationship that provides a predetermined gear ratio. Therefore, the operation ECU 13 acquires the operation angle δ based on the motor rotation angle ω detected via the motor rotation angle sensor 116. Then, the turning ECU 14 acquires information on the operation angle δ from the operation ECU 13, and decides a target turning angle θd that is a target for the turning angle θ of the right front wheel 31 and the left front wheel 32 by multiplying the acquired operation angle δ by a set steering gear ratio Rg according to Formula (1).

$$\theta d = Rg \times \delta \ldots \text{Formula (1)}$$

In the steering system 10, the control of the turning angle θ of the right front wheel 31 and the left front wheel 32 is performed by using the motor rotation angle v instead of the turning angle θ. Therefore, the turning ECU 14 decides a target motor rotation angle vd that is a target for the motor rotation angle v of the turning motor 126 based on the target turning angle θd decided according to Formula (1). The turning ECU 14 detects an actual motor rotation angle v of the turning motor 126 via the motor rotation angle sensor 127, and decides a motor rotation angle deviation Δv that is a deviation of the motor rotation angle v from the target motor rotation angle vd according to Formula (2).

$$\Delta v = vd - v \ldots \text{Formula (2)}$$

Here, in the steering system 10, the turning ECU 14 decides a torque Ts (hereinafter, referred to as a "turning torque Ts") to be generated by the turning motor 126 according to a feedback control rule based on the motor rotation angle deviation $\Delta v$. That is, the turning ECU 14 decides the turning torque Ts according to Formula (3).

$$\text{Ts} = \text{Gp} \times \Delta v + \text{Gi} \times \int\Delta v dt + \text{Gd} \times d\Delta v/dt \ldots \text{Formula (3)}$$

Note that, in Formula (3), the first term is a proportional term, the second term is an integral term, and the third term is a differential term. In Formula (3), Gp represents a proportional gain, Gi represents an integral gain, and Gd represents a differential gain.

In the turning control, the turning ECU 14 supplies the turning motor 126 with the turning current I that corresponds to the turning torque Ts decided according to Formula (3). Here, the turning current I is approximately proportional to the turning torque Ts. Accordingly, the turning ECU 14 decides the turning current I to be supplied to the turning motor 126 based on the decided turning torque Ts, for example, according to the proportional relationship. The turning ECU 14 operates the turning motor 126 by supplying the turning current I to the turning motor 126 via, for example, an inverter (not shown) and turns the wheels 3, that is, the right front wheel 31 and the left front wheel 32, until the target turning angle θd is obtained.

The reaction force control is control of applying the operation reaction force Fc to the steering wheel 111 to give the driver an operation feeling for the steering operation. The reaction force control is executed by the operation ECU 13 in the main control state and in the sub-control state described below. Specifically, the operation ECU 13 decides the operation reaction force Fc according to Formula (4) using two components of a turning load dependent component Fs and an operation force dependent decrease component Fa.

$$\text{Fc} = \text{Fs} - \text{Fa} \ldots \text{Formula (4)}$$

Here, the turning load dependent component Fs in Formula (4) is a component related to a turning force (the turning torque Ts of the turning motor 126) needed to turn the right front wheel 31 and the left front wheel 32, and is decided based on the turning current I supplied to the turning motor 126. Although the detailed description is omitted, the larger the turning current I, the greater the turning load on the right front wheel 31 and the left front wheel 32 is recognized to be, and the turning load dependent component Fs is decided to be a larger value. In the main control state, information on the turning current I actually supplied to the turning motor 126 is supplied from the turning ECU 14 to the operation ECU 13 via the communication line L. In the sub-control state, the information on the turning current I is generated by the operation ECU 13 based on, for example, a preset relationship.

The operation force dependent decrease component Fa in Formula (4) is, for example, a component for giving a driver an operation feeling in a power steering system in the related art. In the power steering system in the related art, an assist torque corresponding to the operation torque To is generally generated by, for example, the electric motor and applied to the steering shaft 112.

Therefore, the operation force dependent decrease component Fa is decided according to Formula (5) to reproduce the assist torque. The operation ECU 13 acquires the operation torque To via the operation torque sensor 119.

$$\text{Fa} = \beta \times \text{To} \ldots \text{Formula (5)}$$

Note that, in Formula (5), $\beta$ represents a gain for deciding the operation force dependent decrease component Fa.

The operation ECU 13 decides a reaction force current Ic that is a current supplied to the reaction force motor 115 according to Formula (6), based on the operation reaction force Fc decided according to Formula (4). Then, the operation ECU 13 supplies the decided reaction force current Ic to the reaction force motor 115.

$$\text{Ic} = \alpha \times \text{Fc} \ldots \text{Formula (6)}$$

Note that, in Formula (6), $\alpha$ represents a preset power decision coefficient.

3. Configuration of State Transition Permission Unit 15

As described above, the operation ECU 13 as a controller can realize a main control state in which the turning operation of the right front wheel 31 and the left front wheel 32 that are turning wheels is controlled by cooperation with the turning ECU 14 as a controller in response to the operation of the steering wheel 111 that serves as an operation member. On the other hand, the operation ECU 13 enables a state transition to a sub-control state in which the operation of the steering wheel 111 is controlled in a state where synchronization with the right front wheel 31 and the left front wheel 32 is released, unlike the main control state, for example, while the battery 59 mounted on the vehicle 1 is being charged as described below.

Here, an example of the main control state is a control state in which, when the vehicle 1 is traveling, the operation device 11 and the turning device 12 cooperate to perform the turning operation of the right front wheel 31 and the left front wheel 32 in synchronization with each other so that the turning angle $\theta$ is obtained in response to the operation angle $\delta$ of the steering wheel 111. An example of the sub-control state is a control state in which the synchronization between the operation device 11 and the turning device 12 is released, that is, the operation device 11 and the turning device 12 are prohibited from cooperating to perform the turning operation of the right front wheel 31 and the left front wheel 32 while the vehicle 1 is stopped (parked) during charging of the battery 59.

As a result, in the sub-control state, when the steering wheel 111 is operated, the operation ECU 13 applies the operation reaction force Fc to the operation of the steering wheel 111 via the operation device 11, but the turning ECU 14 does not operate the turning device 12, and as a result, the right front wheel 31 and the left front wheel 32 are not turned. That is, in the sub-control state, the operation device 11 can be made independent of the turning device 12. Therefore, in the sub-control state, an occupant of the vehicle 1, that is, a specific user who will be described below and who is an administrator or a permitted user can be provided with entertainment mainly composed of a game in which, for example, the steering wheel 111 is used to issue an instruction to move a virtual moving body, such as a virtual vehicle or a virtual airplane, and to perform control while the battery 59 is being charged.

Incidentally, the main control state is a control state in which the right front wheel 31 and the left front wheel 32 are appropriately turned while the vehicle 1 is traveling, and thus is naturally more significant and has to be prioritized over the sub-control state that enables entertainment. Therefore, it is significant that a state transition from the main control state to the sub-control state is not easily performed and that a state transition from the sub-control state to the main control state is safely performed. Accordingly, when executing a state transition between the main control state and the sub-control state, there is a need to determine a preset state transition condition related to the safety of the vehicle 1 and to permit the state transition in a case where the state transition condition is satisfied.

Therefore, the steering system 10 mounted on the vehicle 1 includes a state transition permission unit 15 as a state transition permission section that determines the state transition condition and that permits the state transition in a case where the state transition condition is satisfied. In FIG. 1, the state transition permission unit 15 is indicated as "S/P-UNIT 15".

Here, in the present embodiment, the state transition permission unit 15 is integrally provided in the operation ECU 13 that is a controller. Therefore, the state transition permission unit 15 is also configured to include a microcomputer including a CPU, a ROM, a RAM, and various interfaces as its main component. The state transition permission unit 15 includes a microcomputer as a main component, and thus can be configured as a standalone electric control unit. In addition, the state transition permission unit 15 can be integrally provided in an ECU other than the operation ECU 13.

The state transition permission unit 15 can communicate with various ECUs, such as the drive ECU 61, the brake ECU 62, and the turning ECU 14, via the communication line L, and can acquire detection values from various sensors, such as the sensor group 7. Further, the state transition permission unit 15 is connected to an authentication device 16, an input device 17, and a display device 18.

The state transition permission unit 15 determines the "state transition condition" and permits a state transition between the main control state, the sub-control state, and a stop state. The "state transition condition" includes a "vehicle-related condition", an "authentication condition", and a "stop condition". Here, in the present embodiment, seven conditions are exemplified as the "vehicle-related condition", two conditions are exemplified as the "authentication condition", and two conditions are exemplified as the "stop condition".

First, the vehicle-related condition is a condition for determining a state of the vehicle 1, more specifically, a vehicle speed, a vehicle speed state, a drivetrain state, a powertrain state, a steer-by-wire system state, a vehicle communication state, and a steering state that represent a state in which the vehicle 1 is stopped safely. That is, in the present embodiment, the vehicle-related condition is composed of "vehicle-related condition 1", "vehicle-related condition 2", "vehicle-related condition 3", "vehicle-related condition 4", "vehicle-related condition 5", "vehicle-related condition 6", and "vehicle-related condition 7".

Specifically, the vehicle-related condition 1 is a condition for determining whether the vehicle speed is "zero". Therefore, the vehicle-related condition 1 can be, for example, a condition for determining whether the vehicle speed obtained by using the detection signals Swv1 to Swv4 from the wheel speed sensor 76 is "zero". In addition, the vehicle-related condition 1 may be, for example, a condition for determining whether the braking force is applied by the parking brake based on the detection signal Spb from the parking brake sensor 77.

As the vehicle-related condition 1, a condition can be set such that the accelerator operation amount is "zero" (the accelerator is not operated) based on the detection signal Sa from the accelerator sensor 71, or that the brake operation amount is not "zero" (the brake is operated) based on the detection signal Sb from the brake sensor 75. In this case, when determining the state transition, it is determined that the accelerator operation amount is "zero" based on the detection signal Sa from the accelerator sensor 71, and that the brake operation amount is not "zero" based on the detection signal Sb from the brake sensor 75, but this is not the case after the determination.

The vehicle-related condition 2 is a condition for determining whether the vehicle speed state, that is, the detection state of the vehicle speed, is valid. Therefore, the vehicle-related condition 2 can be, for example, a condition for determining whether the wheel speed sensor 76 is operating properly, that is, an accuracy or output state of the detection signals Swv1 to Swv4 from the wheel speed sensor 76.

The vehicle-related condition 3 is a condition for determining the drivetrain state when the vehicle 1 is stopped. Therefore, the vehicle-related condition 3 is, for example, a condition for determining whether no driving force is output from the front motor 51 and the rear motor 52 to the front wheel axles 54R, 54L and the rear wheel axles 56R, 56L via the differential gear 53 and the differential gear 55, and whether the wheels 3 are in a locked state. Specifically, the vehicle-related condition 3 can be, for example, a condition that the detection signal Smf from the control sensor 72 and the detection signal Smr from the control sensor 73 are "0", and the detection signal Ssp from the shift position sensor 74 is "parking range".

The vehicle-related condition 4 is a condition for determining the powertrain state of the vehicle 1, that is, the states of the front motor 51, the rear motor 52, the inverter 57, the DC/DC converter 58, and the battery 59. Therefore, the vehicle-related condition 4 is a condition for determining whether the vehicle 1 is in a "drive ready" state for making the travel of the vehicle 1 or in a "charge state" where the battery 59 is being charged. Specifically, the vehicle-related condition 4 can be a condition for determining whether the detection signal Smf from the control sensor 72 and the detection signal Smr from the control sensor 73 are "zero", and whether the vehicle 1 is in a charge state in which an alternating current is supplied to the inverter 57 from an outside.

The vehicle-related condition 5 is a condition for determining the steer-by-wire system state of the vehicle 1, that is, the operation state of the steering system 10 including the operation device 11 and the turning device 12. Therefore, the vehicle-related condition 5 can be, for example, a condition for determining whether the detection value from each of the sensors, that is, the motor rotation angle sensor 116, the operation angle sensor 117, and the operation torque sensor 119 provided in the operation device 11, and the motor rotation angle sensor 127, the current sensor 128, and the turning angle sensor 129 provided in the turning device 12, is appropriate.

The vehicle-related condition 6 is a condition for determining the state of the communication line L established in the vehicle 1. Therefore, the vehicle-related condition 6 can be, for example, a condition for determining whether the communication line L is normal based on the exchange of signals between the operation ECU 13, the turning ECU 14, the drive ECU 61, and the brake ECU 62 via the communication line L.

The vehicle-related condition 7 is a condition for determining whether the steering wheel 111 that is an operation member is in a non-operated state and whether the turning actuator 121 is in a non-turned state. Therefore, the vehicle-related condition 7 can be, for example, a condition for determining whether the detection values of the operation angle sensor 117 and the operation torque sensor 119 are "zero" and whether the detection values of the motor rotation angle sensor 127, the current sensor 128, and the turning angle sensor 129 are "zero".

Next, the authentication condition is a condition including an "administrator authentication condition" for authenticating an administrator who manages the vehicle 1 among specific users who can get on the vehicle 1 and a "permitted user authentication condition" for authenticating a permitted user who is permitted by the administrator among the specific users. The administrator authentication condition is, for example, a key matching condition for matching a physical key (such as a smart key or smartphone) linked to the vehicle 1 on the authentication device 16 of the vehicle 1, and a biometric authentication condition for authenticating biometric information.

Specifically, the administrator of the vehicle 1 usually possesses a physical key and operates the physical key when getting into the vehicle 1. In response to the operation, the authentication device 16 matches the physical key, and in a case where the matching is successful, for example, a door is unlocked, thereby allowing the administrator to get on the vehicle. Accordingly, the key matching condition is whether the administrator can get on the vehicle 1 through the operation of the physical key. The administrator who gets on the vehicle 1 inputs biometric information, such as an image of a face captured by the authentication device 16 (or the input device 17) or a fingerprint of a finger acquired by touching the authentication device 16 (or the input device 17). As a result, the authentication device 16 performs matching with pre-registered biometric information of a specific user to authenticate the administrator.

The permitted user authentication condition is, for example, a condition for authenticating the biometric information of a specific user who gets on the vehicle 1 together with the administrator. Specifically, an example of the permitted user is, for example, a child of the administrator. Then, the specific user who gets on the vehicle 1 together with the administrator inputs biometric information, such as an image of a face captured by the authentication device 16 (or the input device 17) or a fingerprint of a finger acquired by touching the authentication device 16 (or the input device 17). As a result, the authentication device 16 performs matching with pre-registered biometric information of a specific user to authenticate the permitted user.

Further, the stop condition is a condition for stopping the operation of the operation device 11 in a game mode that provides a game as entertainment in the sub-control state, that is, for making a state transition to the stop state, as described below. The stop condition is a condition including an "abnormality determination condition" for determining that an abnormality has occurred in the state of the vehicle 1 and a "cut-off determination condition" for determining that the power supply of the vehicle 1 has been cut off.

Specifically, the abnormality determination condition is a condition whether there is at least one unsatisfied condition among the vehicle-related conditions including the vehicle-related condition 1 to the vehicle-related condition 6 (excluding the vehicle-related condition 7) and the authentication condition, or whether an abnormality has occurred in the vehicle 1. The cut-off determination condition is a condition for determining whether the power supply of the vehicle 1 has been cut off, and is a condition for determining whether a start/stop switch, a power switch, an ignition switch, or the like provided in the vehicle 1 is switched from an on state to an off state.

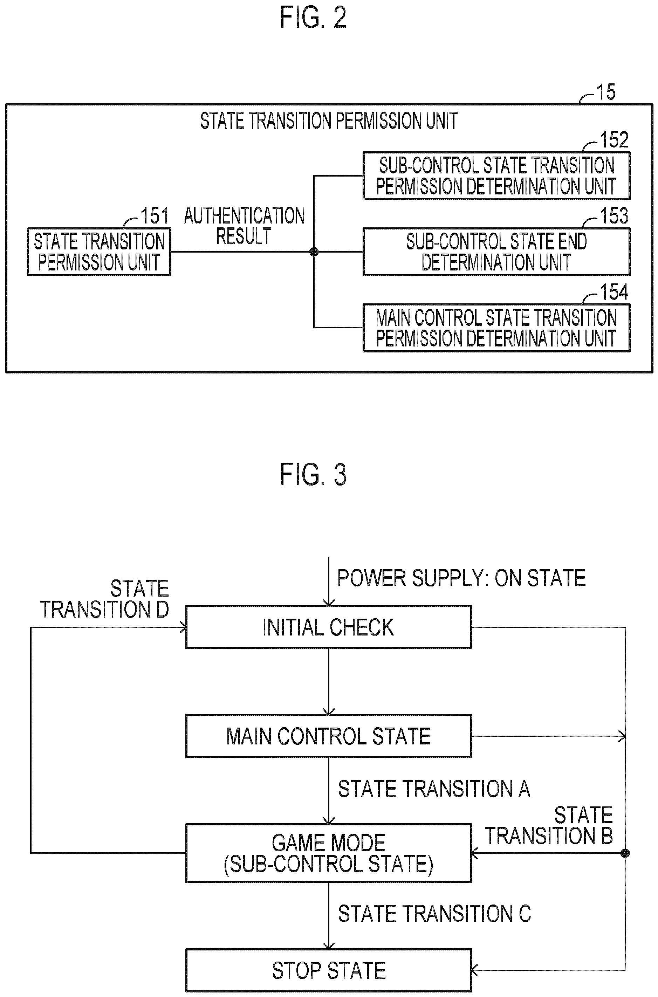

As shown in FIG. 2, the state transition permission unit 15 includes an authentication determination unit 151, a sub-control state transition permission determination unit 152, a sub-control state end determination unit 153, and a main control state transition permission determination unit 154.

The authentication determination unit 151 authenticates a specific user who operates the steering wheel 111, specifically, an administrator and a permitted user, in permitting a state transition between the main control state and the sub-control state. Therefore, the authentication determination unit 151 cooperates with the authentication device 16 (and the input device 17) to determine whether the above-described authentication condition, that is, the administrator authentication condition and the permitted user authentication condition, are satisfied. As a result, the authentication determination unit 151 authenticates the administrator or the permitted user among the specific users. Then, the authentication determination unit 151 outputs an authentication result indicating that at least one of the administrator and the permitted user is appropriately authenticated to each of the sub-control state transition permission determination unit 152, the sub-control state end determination unit 153, and the main control state transition permission determination unit 154.

When a state transition request to the sub-control state is made, the sub-control state transition permission determination unit 152 determines whether to permit the state transition to the sub-control state. Specifically, when the operation ECU 13 is caused to transition from the main control state to the sub-control state or when the operation ECU 13 is caused to transition to the sub-control state immediately after the power supply of the vehicle 1 is turned on, the sub-control state transition permission determination unit 152 determines whether each of seven items of the vehicle-related condition 1 to the vehicle-related condition 7 is satisfied, and also determines whether there is an authentication result from the authentication determination unit 151. Further, the sub-control state transition permission determination unit 152 determines whether the drive system 5, the brake system 8, and the steering system 10 of the vehicle 1 are normal. Then, when seven items of the vehicle-related condition 1 to the vehicle-related condition 7 are all satisfied, the authentication result is acquired, and the vehicle 1 is normal, the sub-control state transition permission determination unit 152 permits the state transition to the sub-control state.

When a situation is such that the sub-control state has to be ended, the sub-control state end determination unit 153 determines whether the above-described stop condition is satisfied. Specifically, the sub-control state end determination unit 153 gives priority to determining whether the above-described abnormality determination condition is satisfied. As a result, when an abnormality occurs in the vehicle 1, the sub-control state end determination unit 153 cooperates with the operation ECU 13 to notify the administrator or the permitted user that the sub-control state is ended due to the occurrence of the abnormality via the display device 18 (for example, augmented reality (AR) glasses or an in-vehicle display). In addition, when an abnormality occurs in the vehicle 1, the sub-control state end determination unit 153 cooperates with the operation ECU 13 to end the sub-control state, for example, by gradually decreasing the control amount of the reaction force applying mechanism 114.

In addition, the sub-control state end determination unit 153 determines whether the above-described cut-off determination condition is satisfied. As a result, when an end operation is performed by the administrator or the permitted user, for example, when a power supply cut-off operation of the vehicle 1 is performed by the administrator or the permitted user, the sub-control state end determination unit 153 cooperates with the operation ECU 13 to, for example, stop the operation of the reaction force applying mechanism 114 to end the sub-control state and finally cut off the power supply of the vehicle 1, in a manner similar to the stop process during a normal power supply cut-off operation.

When a state transition from the sub-control state to the main control state, that is, a return request is made, the main control state transition permission determination unit 154 determines whether to permit the state transition from the sub-control state to the main control state. Specifically, when the operation ECU 13 is caused to transition from the sub-control state to the main control state, the main control state transition permission determination unit 154 determines whether each of seven items of the vehicle-related condition 1 to the vehicle-related condition 7 is satisfied, and also determines whether there is an authentication result from the authentication determination unit 151. Further, the sub-control state transition permission determination unit 152 determines whether the drive system 5, the brake system 8, and the steering system 10 of the vehicle 1 are normal. Then, when a return request is made, seven items of the vehicle-related condition 1 to the vehicle-related condition 7 are all satisfied, the authentication result is acquired, and the vehicle 1 is normal, the sub-control state transition permission determination unit 152 permits the state transition from the sub-control state to the main control state.

In addition, when the state transition from the sub-control state to the main control state is permitted, the main control state transition permission determination unit 154 cooperates with the operation ECU 13 to execute positioning control, for example, by operating the reaction force applying mechanism 114 to rotate the steering wheel 111. As a result, the operation ECU 13 matches the operation angle $\delta$ of the steering wheel 111 with the turning angle $\theta$ of the right front wheel 31 and the left front wheel 32 that are turning wheels turned by the turning actuator 121 of the turning device 12.

4. Processing Content of State Transition Permission Unit 15

Next, processing by the state transition permission unit 15 will be specifically described. In the following description, an example will be given in which the sub-control state is a "game mode" in which a game as entertainment is provided to the administrator or the permitted user.

Here, in the present embodiment, as shown in FIG. 3, four state transitions are exemplified. That is, in the present embodiment, a state transition from the main control state to the game mode that is the sub-control state is referred to as a "state transition A", a state transition directly to the game mode after an initial check is completed, that is, after the power supply of the vehicle 1 is turned on is referred to as a "state transition B", a state transition from the game mode to the stop state is referred to as a "state transition C", and a state transition from the game mode to the main control state is referred to as a "state transition D".

4-1. State Transition A and State Transition B

The state transition A is a case where a state transition to the game mode is made after transitioning to the main control state after the completion of the initial check, as shown in FIG. 3. The state transition B is a case where a state transition is made directly to the game mode after the completion of the initial check, as shown in FIG. 3. The state transition permission unit 15 executes the following processing in order to safely make a state transition to the game mode in both the state transition A and the state transition B.

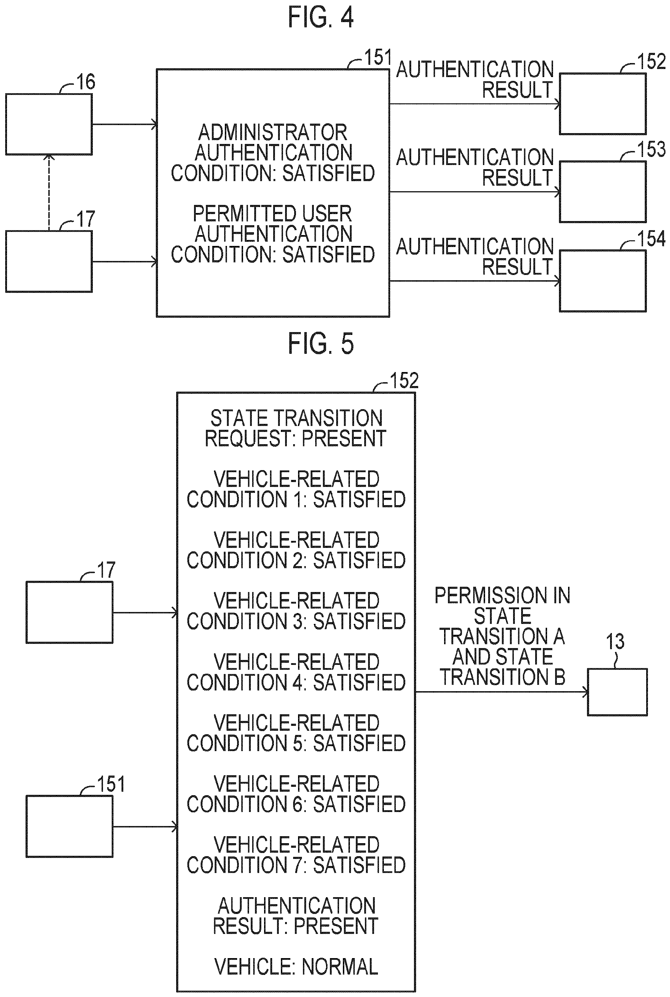

That is, in the state transition A and the state transition B, as shown in FIG. 4, for example, a specific user (administrator) who operates a physical key to get on the vehicle inputs a state transition request to the game mode via the input device 17. As a result, the authentication determination unit 151 of the state transition permission unit 15 cooperates with the authentication device 16 (and the input device 17) to authenticate at least one of the administrator and the permitted user, and outputs the authentication result.

Then, in the state transition A and the state transition B, as shown in FIG. 5, for example, the administrator or the permitted user inputs the state transition request via the input device 17. When the state transition request is made as described above, the sub-control state transition permission determination unit 152 of the state transition permission unit 15 determines whether to permit the state transition from the main control state to the game mode that is the sub-control state. Specifically, when seven items of the vehicle-related condition 1 to the vehicle-related condition 7 are all satisfied, the authentication result indicating that the administrator authentication condition and the permitted user authentication condition are satisfied is obtained, and the drive system 5, the brake system 8, and the steering system 10 of the vehicle 1 are normal, the sub-control state transition permission determination unit 152 permits the state transition of the operation ECU 13 to the game mode. In the following description, a condition that seven items of the vehicle-related condition 1 to the vehicle-related condition 7 are all satisfied and the authentication result is acquired, that is, a precondition under which the state transition to the game mode through the state transition A or the state transition B is permitted, is referred to as a "game mode state transition precondition".

Here, when the state transition permission unit 15 permits the state transition to the game mode, it is significant that the safety of the vehicle 1 is maintained. That is, it is significant to confirm that the vehicle 1 remains completely stopped and unable to travel and the drive system 5, the brake system 8, and the steering system 10 of the vehicle 1 are normal, and that the state transition request to the game mode is certain.

Therefore, in a state where the drive system 5, the brake system 8, and the steering system 10 are normal after the initial check, the state transition permission unit 15 authenticates at least one of the administrator and the permitted user after the authentication determination unit 151 inputs the state transition request. Then, in the state transition permission unit 15, the sub-control state transition permission determination unit 152 determines that seven items of the vehicle-related condition 1 to the vehicle-related condition 7 are all satisfied, that is, the vehicle 1 is safely stopped and is normal, on the assumption that the authentication of at least one of the administrator and the permitted user is successful, that is, the authentication result is obtained. Here, in a case where an abnormality occurs in the drive system 5, the brake system 8, or the steering system 10 of the vehicle 1 in the initial check, the state transition permission unit 15 makes a state transition from the initial check to the stop state as shown in FIG. 3.

## 4-2. State Transition C

The state transition C is a case where a state transition from the game mode to the stop state is made due to an abnormal end or an end operation by the authenticated administrator or permitted user, as shown in FIG. 3. The state transition permission unit 15 executes the following processing, particularly in the case of an abnormal end, in order to give the highest priority to causing the state transition to the stop state safely.

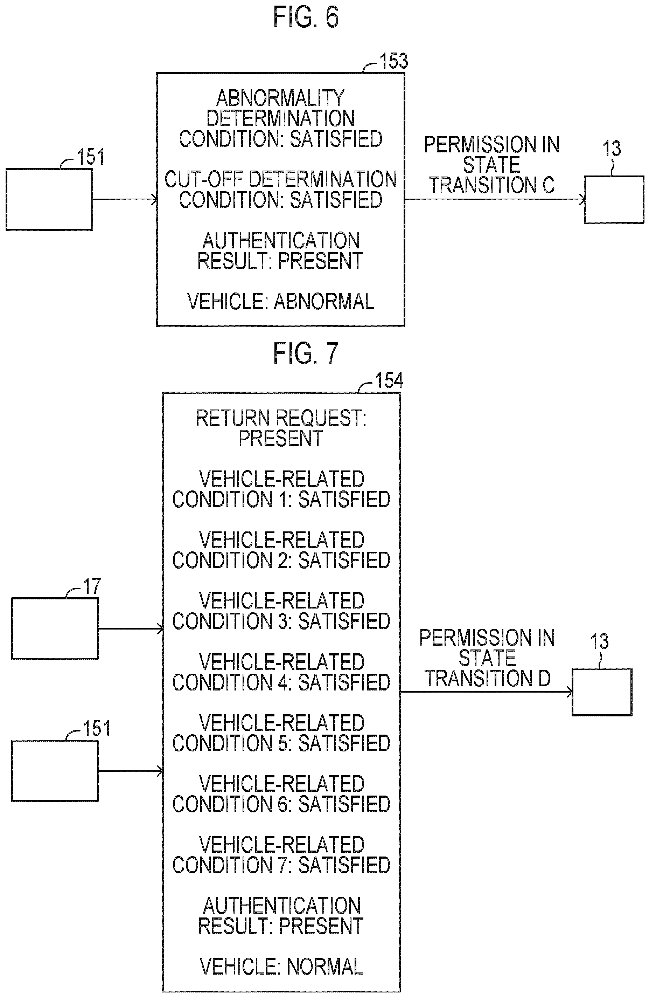

That is, in the state transition C, as shown in FIG. 6, the sub-control state end determination unit 153 determines whether the abnormality determination condition is satisfied, to permit the state transition to the stop state due to the abnormal end. Here, the sub-control state end determination unit 153 determines whether there is unsatisfied condition among six items of the vehicle-related condition 1 to the vehicle-related condition 6 that form the game mode state transition precondition which is not satisfied, as the abnormality determination condition. In the game mode, since there is a high probability that the steering wheel 111 is being operated, the "vehicle-related condition 7" that includes the condition that the steering wheel 111 is in a non-operated state is excluded.

That is, in this case, a part of the game mode state transition precondition is not satisfied. Accordingly, when there is unsatisfied condition among six items of the vehicle-related condition 1 to the vehicle-related condition 6 is not satisfied, the sub-control state end determination unit 153 determines the end of the game mode (sub-control state), thereby permitting the state transition of the operation ECU 13 from the game mode to the stop state.

In addition, in the state transition C, as shown in FIG. 6, a determination is made as to whether an abnormality has occurred in the drive system 5, the brake system 8, or the steering system 10 of the vehicle 1, to permit the state transition to the stop state due to the abnormal end. That is, in this case, for example, the vehicle 1 has some kind of abnormality, such as an abnormality in a charging system including the battery 59 or the turning actuator 121 of the turning device 12. Accordingly, when an abnormality occurs in the vehicle 1, the sub-control state end determination unit 153 determines the end of the game mode (sub-control state), thereby permitting the state transition of the operation ECU 13 from the game mode to the stop state.

When an abnormality occurs in the vehicle 1, the sub-control state end determination unit 153 cooperates with the operation ECU 13 to notify the administrator or the permitted user that the game is ended due to the occurrence of the abnormality via the display device 18. In addition, when an abnormality occurs in the vehicle 1, the sub-control state end determination unit 153 cooperates with the operation ECU 13 to stop the operation of the steering system 10.

Further, in the state transition C, as shown in FIG. 6, the sub-control state end determination unit 153 determines the cut-off determination condition to permit the state transition to the stop state due to the end operation. That is, the sub-control state end determination unit 153 determines whether a start/stop switch, a power switch, an ignition switch, or the like provided in the vehicle 1 is switched from an on state to an off state, as the end operation.

That is, in this case, the game mode is ended by the authenticated administrator or permitted user cutting off the power supply of the vehicle 1. Accordingly, when the power supply of the vehicle 1 is cut off, the sub-control state end determination unit 153 determines the end of the game mode (sub-control state), thereby permitting the state transition of the operation ECU 13 from the game mode to the stop state. When the power supply of the vehicle 1 is cut off, the sub-control state end determination unit 153 cooperates with the operation ECU 13 to stop the operation of the steering system 10 and finally cut off the power supply of the vehicle 1.

Here, in a case where a determination is made regarding the state transition to the stop state for some reason other than the state transition to the stop state due to the above-described abnormal end and the state transition to the stop state by the end operation, the previous determination result is maintained in the determination process that is executed subsequently by the sub-control state end determination unit 153. As a result, the state transition permission unit 15 can be prevented from repeatedly determining the state transition to the stop state.

As shown in FIG. 3, in the normal use mode of the vehicle 1, even in a case where the state transition from the main control state to the stop state is made, the state transition permission unit 15 can permit the state transition from the main control state to the stop state. That is, when the power supply of the vehicle 1 is cut off by the end operation in the main control state, the state transition permission unit 15 can permit the state transition to the stop state. When the end operation is performed, the power supply of the vehicle 1 is finally cut off. In a case where an abnormality occurs in the vehicle 1 in the main control state, the state transition permission unit 15 can notify of the occurrence of the abnormality via the display device 18 and permit the state transition to the stop state.

## 4-3. State Transition D

The state transition D is a case where a state transition to the main control state is made after the completion of the initial check from the game mode, as shown in FIG. 3. The state transition permission unit 15 executes the following processing in order to safely leave the game mode and transition (return) to the main control state.

That is, in the state transition D, as shown in FIG. 7, for example, the administrator or the permitted user inputs the return request (state transition request) to the main control state via the input device 17. When the return request is made as described above, the main control state transition permission determination unit 154 of the state transition permission unit 15 determines whether to permit the state transition from the game mode that is the sub-control state to the main control state. Specifically, when the game mode state transition precondition is satisfied and the drive system 5, the brake system 8, and the steering system 10 of the vehicle 1 are normal, the main control state transition permission determination unit 154 permits the state transition of the operation ECU 13 from the game mode to the main control state.

That is, the state transition permission unit 15 permits the state transition from the game mode to the main control state solely when the return request is made by the administrator or the permitted user, the game mode state transition precondition is satisfied, and the vehicle 1 is normal, in order to safely transition (return) to the main control state. Therefore, for example, when the game mode state transition precondition is not satisfied or when an abnormality occurs in any of the drive system 5, the brake system 8, and the steering system 10 of the vehicle 1 in the initial check, the state transition permission unit 15 prioritizes the state transition C and makes the state transition to the stop state.

In the state transition D, even when the vehicle-related condition 7 is satisfied, that is, even when the steering wheel 111 is in a non-operated state, the steering wheel 111 is operated in the game mode, so that a situation may occur in which the operation angle $\delta$ of the steering wheel 111 and the turning angle $\theta$ of the right front wheel 31 and the left front wheel 32 cannot be synchronized with each other. Therefore, in the state transition D, the positioning control is executed by the initial check after the state transition from the game mode, thereby synchronizing the operation angle $\delta$ and the turning angle $\theta$, and then the state transition to the main control state is made. In addition, since a strict initial check is performed when the power supply of the vehicle 1 is turned on, a part of check items may be omitted from the initial check performed in the state transition D.

As can be understood from the above description, the steering system 10 includes the operation device 11 including the steering wheel 111 as an operation member and configured to generate the operation reaction force Fc that is the reaction force to the operation of the steering wheel 111 and apply the operation reaction force Fc to the steering wheel 111, the turning device 12 configured to turn the wheels 3 (the right front wheel 31 and the left front wheel 32) that are the turning wheels of the vehicle 1 when mechanical connection with the operation device 11 is released, and the operation ECU 13 and the turning ECU 14 as the controller configured to realize the turning operation of the wheels 3 through the turning device 12 in response to the operation of the steering wheel 111. The operation ECU 13 out of the operation ECU 13 and the turning ECU 14 has control states including the main control state in which the turning device 12 is controlled in cooperation with the operation device 11 and the turning ECU 14 to synchronize the operation of the steering wheel 111 and the turning operation with each other, a sub-control state in which at least the operation device 11 is controlled not to synchronize the operation of the steering wheel 111 and the turning operation with each other, and a stop state in which the operation of the turning device 12 is stopped in cooperation with the operation device 11 and the turning ECU 14, and is configured to make a state transition of the control state between the main control state, the sub-control state, and the stop state. The steering system 10 further includes the state transition permission unit 15 as the state transition permission section configured to, when executing the state transition, determine whether a predetermined state transition condition related to safety of the vehicle 1 is satisfied and permit the state transition in a case where the state transition condition is satisfied.

In this case, the state transition condition may include at least the vehicle-related condition related to the state of the vehicle 1. In this case, the vehicle-related condition may include the condition for determining at least one state of the stop state of the vehicle 1, the communication state via the communication line L established in the vehicle 1, the operation state of the operation device 11, and the operation state of the turning device 12. In this case, in a case where the vehicle 1 is an electric vehicle that needs charging of the battery 59 for driving the front motor 51 and the rear motor 52 that are electric motors, the vehicle-related condition may include a condition for determining the charge state of the battery 59.

In addition, in this case, the state transition condition may include the authentication condition for authenticating a specific user who instructs the operation ECU 13 to execute the state transition. In this case, the authentication condition may include the administrator authentication condition for authenticating the administrator who manages the vehicle 1 among the specific users. In this case, the authentication condition may include the permitted user authentication condition for authenticating the permitted user who is permitted by the administrator among the specific users.

In addition, in this case, the state transition condition may include the stop condition for stopping the operation of the operation device 11 in the sub-control state. In this case, the stop condition may include the abnormality determination condition for determining that an abnormality has occurred in the state of the vehicle 1. In this case, the stop condition may include the cut-off determination condition for determining that the power supply of the vehicle 1 has been cut off.

In addition, in this case, the state transition permission unit 15 may be configured to, when determining whether to permit the state transition, determine whether the drive system 5, the brake system 8, and the steering system 10 that are systems constituting the vehicle 1 are normal in addition to determining whether the state transition condition is satisfied.

In addition, in this case, the vehicle 1 may be an electric vehicle that needs charging of the battery 59 for driving the front motor 51, and the rear motor 52, and the operation ECU 13 may be configured to, while the battery 59 is being charged, execute the state transition from the main control state to the sub-control state in a case where the state transition is permitted by the state transition permission unit 15 as a result of the satisfaction of the state transition condition.

In addition, in this case, the operation ECU 13 may be configured to, in a case where there is a difference between the operation angle δ representing the operation position of the steering wheel 111 operated in the sub-control state and the turning angle θ representing the turning position associated with the turning operation of the right front wheel 31 and the left front wheel 32 when executing the state transition from the sub-control state to the main control state in response to the permission through the state transition permission unit 15, execute the positioning control to match the operation angle δ with the turning angle θ. In this case, the operation ECU 13 may be configured to, in the positioning control, operate the operation device 11 to generate the operation reaction force Fc on the steering wheel 111 to match the operation angle δ with the turning angle θ.

In addition, in this case, in the sub-control state, the operation ECU 13 may realize the provision of the entertainment using the steering wheel 111 in the vehicle 1 in the sub-control state. In this case, the entertainment may be a game in which equipment including the steering wheel 111 and mounted on the vehicle 1 is operated to issue an instruction to operate the virtual moving body.

With the steering system 10, when the state transition permission unit 15 provided in the operation ECU 13 determines that the state transition condition is satisfied and permits the state transition, the transition of the control state of the operation ECU 13 can be made. Specifically, when the state transition condition is satisfied and the state transition is permitted, the operation ECU 13 can make the state transition of the control state between the main control state, the sub-control state, and the stop state. As a result, the steering system 10 can maintain the safety of the vehicle 1, particularly when performing the state transition between the main control state and the sub-control state.

In addition, when permitting the state transition, the state transition permission unit 15 can determine whether the drive system 5, the brake system 8, and the steering system 10 of the vehicle 1 are normal in addition to determining whether the state transition condition is satisfied. As a result, particularly when there is state transition from the sub-control state to the main control state, inconvenience in the traveling of the vehicle 1 can be suppressed, thereby maintaining the safety of the vehicle 1.

Further, with the steering system 10, for example, in a case where the vehicle 1 is an electric vehicle, when the state transition permission unit 15 permits the state transition to the sub-control state as a result of the satisfaction of the state transition condition while the battery 59 is being charged, the operation ECU 13 can provide the execution of a game as entertainment using the steering wheel 111 to the administrator or the permitted user. In this case as well, since the provision of the game is realized based on the permission by the state transition permission unit 15, the safety of the vehicle 1 can be maintained. In this case, for example, even when a time needed to charge the battery 59 is long, the administrator or the permitted user can continue to enjoy playing the game.

5. Modification Example

In the above-described embodiment, the state transition permission unit 15 as the state transition permission section is provided in the operation ECU 13 that is a controller of the steering system 10, and the state transition permission unit 15 is configured to permit the state transition of the control state in the operation ECU 13. In addition, for example, the state transition permission section may be provided in the drive ECU 61 and the brake ECU 62 that constitute the braking/driving controller 6.

As a result, for example, as described above, in a case where a game is provided as entertainment in the sub-control state, the administrator or the permitted user can operate an accelerator pedal and a brake pedal to maintain the safety of the vehicle in addition to the steering wheel 111 of the steering system 10. That is, also in the drive ECU 61 and the brake ECU 62, when the state transition between the main control state and the sub-control state is performed, the safety of the vehicle can be maintained by considering the state transition to maintain the safety of the vehicle. Accordingly, in this case as well, the same effects as those of the above-described embodiment can be obtained.

In the above-described embodiment, for example, the steering system 10 mounted on the vehicle 1 that travels by manual driving of the driver who is the administrator has been exemplified. That is, a case where the steering wheel 111 is manually operated in the main control state and the sub-control state has been exemplified. Alternatively, the steering system may be one that is not operated by autonomous driving in the main control state and that is manually operated when providing a game as entertainment in the sub-control state. In this case as well, regardless of whether the vehicle 1 is being driven by manually or autonomously, the safety of the vehicle 1 can be maintained when performing the state transition between the main control state and the sub-control state. Accordingly, in this case as well, the same effects as those of the above-described embodiment can be obtained.

Further, in the above-described embodiment, a case where the vehicle 1 is an electric vehicle (EV) that uses solely an electric motor as a driving force source has been exemplified. However, the vehicle 1 may be, for example, a vehicle (hybrid electric vehicle (HEV), plug-in hybrid electric vehicle (PHEV), or the like) that uses an internal combustion engine and an electric motor as driving force sources, or a vehicle that uses solely an internal combustion engine as a driving force source. In this case as well, the same effects as those of the above-described embodiment can be obtained.

Here, a steering system according a first aspect of the present disclosure includes an operation device, a turning device, and a controller. The operation device includes an operation member and is configured to generate a reaction force to an operation of the operation member and apply the reaction force to the operation member. The turning device is configured to turn turning wheels of a vehicle when mechanical connection with the operation device is released. The controller is configured to realize a turning operation of the turning wheels through the turning device in response to the operation of the operation member. The controller has control states including a main control state in which the operation device and the turning device are controlled to synchronize the operation of the operation member and the turning operation with each other, a sub-control state in which at least the operation device is controlled not to synchronize the operation of the operation member and the turning operation with each other, and a stop state in which operations of the operation device and the turning device are stopped, and is configured to make a state transition of the control state between the main control state, the sub-control state, and the stop state. The steering system further includes a state transition permission section. The state transition permission section is configured to, when executing the state transition, determine whether a predetermined state transition condition related to safety of the vehicle is satisfied and permit the state transition in a case where the state transition condition is satisfied.

In addition, a second aspect of the present disclosure provides the steering system according to the first aspect, in which the state transition condition includes at least a vehicle-related condition related to a state of the vehicle.

In addition, a third aspect of the present disclosure provides the steering system according to the second aspect, in which the vehicle-related condition includes a condition for determining at least one state of a stop state of the vehicle, a communication state via a communication line established in the vehicle, an operation state of the operation device, and an operation state of the turning device.

In addition, a fourth aspect of the present disclosure provides the steering system according to the first aspect or the second aspect, in which, in a case where the vehicle is an electric vehicle that requires charging of a battery for driving an electric motor, the vehicle-related condition includes a condition for determining a charging state of the battery.

In addition, a fifth aspect of the present disclosure provides the steering system according to any one of the first aspect to the fourth aspect, in which the state transition condition includes an authentication condition for authenticating a specific user who instructs the controller to execute the state transition.

In addition, a sixth aspect of the present disclosure provides the steering system according to the fifth aspect, in which the authentication condition includes an administrator authentication condition for authenticating an administrator who manages the vehicle among the specific users.

In addition, a seventh aspect of the present disclosure provides the steering system according to the fifth aspect or the sixth aspect, in which the authentication condition includes a permitted user authentication condition for authenticating a permitted user who is permitted by the administrator among the specific users.

In addition, an eighth aspect of the present disclosure provides the steering system according to any one of the first aspect to the seventh aspect, in which the state transition condition includes a stop condition for stopping the operation of the operation device in the sub-control state.

In addition, a ninth aspect of the present disclosure provides the steering system according to the eighth aspect, in which the stop condition includes an abnormality determination condition for determining that an abnormality has occurred in a state of the vehicle.

In addition, a tenth aspect of the present disclosure provides the steering system according to the eighth aspect or the ninth aspect, in which the stop condition includes a cut-off determination condition for determining that a power supply of the vehicle has been cut off.

In addition, an eleventh aspect of the present disclosure provides the steering system according to any one of the first aspect to the tenth aspect, in which the state transition permission section is configured to, when determining whether to permit the state transition, determine whether a system constituting the vehicle is normal in addition to determining whether the state transition condition is satisfied.

In addition, a twelfth aspect of the present disclosure provides the steering system according to any one of the first aspect to the eleventh aspect, in which the vehicle is an electric vehicle that requires charging of a battery for driving an electric motor, and the controller is configured to, while the battery is being charged, execute the state transition from the main control state to the sub-control state in a case where the state transition is permitted by the state transition permission section as a result of the satisfaction of the state transition condition.

In addition, a thirteenth aspect of the present disclosure provides the steering system according to any one of the first aspect to the twelfth aspect, in which the controller is configured to, in a case where there is a difference between an operation position of the operation member operated in the sub-control state and a turning position associated with the turning operation of the turning wheels when executing the state transition from the sub-control state to the main control state in response to the permission through the state transition permission section, execute positioning control to match the operation position with the turning position.

In addition, a fourteenth aspect of the present disclosure provides the steering system according to the thirteenth aspect, in which the controller is configured to, in the positioning control, operate the operation device to generate the reaction force on the operation member to match the operation position with the turning position.

In addition, a fifteenth aspect of the present disclosure provides the steering system according to any one of the first aspect to the fourteenth aspect, in which the controller is configured to provide entertainment using the operation member in the vehicle in the sub-control state.

Further, a sixteenth aspect of the present disclosure provides the steering system according to the fifteenth aspect, in which the entertainment is a game in which equipment including the operation member and mounted on the vehicle is operated to issue an instruction to operate a virtual moving body.

**Claims**

1. A steering system (10) comprising:

   an operation device (11) including an operation member (111) and configured to generate a reaction force to an operation of the operation member (111) and apply the reaction force to the operation member (111);
   a turning device (12) configured to turn turning wheels (31, 32) of a vehicle (1) when mechanical connection with the operation device (11) is released; and
   a controller (13, 14) configured to realize a turning operation of the turning wheels (31, 32) through the turning device (12) in response to the operation of the operation member (111), wherein:

   the controller (13, 14) has control states including a main control state in which the operation device (11) and the turning device (12) are controlled to synchronize the operation of the operation member (111) and the turning operation with each other, a sub-control state in which at least the operation device (11) is controlled not to synchronize the operation of the operation member (111) and the turning operation with each other, and a stop state in which operations of the operation device (11) and the turning device (12) are stopped, and is configured to make a state transition of the control state between the main control state, the sub-control state, and the stop state; and
   the steering system (10) further comprises a state transition permission section (15) configured to, when executing the state transition, determine whether a predetermined state transition condition related to safety of the vehicle (1) is satisfied and permit the state transition in a case where the state transition condition is satisfied.

2. The steering system (10) according to claim 1, wherein the state transition condition includes at least a vehicle-related condition related to a state of the vehicle (1).

3. The steering system (10) according to claim 2, wherein the vehicle-related condition includes a condition for determining at least one state of a stop state of the vehicle (1), a communication state via a communication line established in the vehicle (1), an operation state of the operation device (11), and an operation state of the turning device (12).

4. The steering system (10) according to claim 3, wherein, in a case where the vehicle (1) is an electric vehicle that requires charging of a battery (59) for driving an electric motor (51, 52), the vehicle-related condition includes a condition for determining a charging state of the battery (59).

5. The steering system (10) according to claim 1, wherein the state transition condition includes an authentication condition for authenticating a specific user who instructs the controller (13, 14) to execute the state transition.

6. The steering system (10) according to claim 5, wherein the authentication condition includes an administrator authentication condition for authenticating an administrator who manages the vehicle (1) among the specific users.

7. The steering system (10) according to claim 6, wherein the authentication condition includes a permitted user authentication condition for authenticating a permitted user who is permitted by the administrator among the specific users.

8. The steering system (10) according to claim 1, wherein the state transition condition includes a stop condition for stopping the operation of the operation device (11) in the sub-control state.

9. The steering system (10) according to claim 8, wherein the stop condition includes an abnormality determination condition for determining that an abnormality has occurred in a state of the vehicle (1).

10. The steering system (10) according to claim 9, wherein the stop condition includes a cut-off determination condition for determining that a power supply of the vehicle (1) has been cut off.

11. The steering system (10) according to claim 1, wherein the state transition permission section (15) is configured to, when determining whether to permit the state transition, determine whether a system constituting the vehicle (1) is normal in addition to determining whether the state transition condition is satisfied.

12. The steering system (10) according to claim 1, wherein:

the vehicle (1) is an electric vehicle that requires charging of a battery (59) for driving an electric motor (51, 52); and
the controller (13, 14) is configured to, while the battery (59) is being charged, execute the state transition from the main control state to the sub-control state in a case where the state transition is permitted by the state transition permission section (15) as a result of the satisfaction of the state transition condition.

13. The steering system (10) according to claim 1, wherein the controller (13) is configured to, in a case where there is a difference between an operation position of the operation member (111) operated in the sub-control state and a turning position associated with the turning operation of the turning wheels (31, 32) when executing the state transition from the sub-control state to the main control state in response to the permission through the state transition permission section (15), execute positioning control to match the operation position with the turning position.

14. The steering system (10) according to claim 13, wherein the controller (13) is configured to, in the positioning control, operate the operation device (11) to generate the reaction force on the operation member (111) to match the operation position with the turning position.

15. The steering system (10) according to claim 1, wherein the controller (13) is configured to provide entertainment using the operation member (111) in the vehicle (1) in the sub-control state.

# FIG. 1

# FIG. 2

15

STATE TRANSITION PERMISSION UNIT

152

SUB-CONTROL STATE TRANSITION PERMISSION DETERMINATION UNIT

151

STATE TRANSITION PERMISSION UNIT

AUTHENTICATION RESULT

153

SUB-CONTROL STATE END DETERMINATION UNIT

154

MAIN CONTROL STATE TRANSITION PERMISSION DETERMINATION UNIT

# FIG. 3

POWER SUPPLY: ON STATE

STATE TRANSITION D

INITIAL CHECK

MAIN CONTROL STATE

STATE TRANSITION A

STATE TRANSITION B

GAME MODE (SUB-CONTROL STATE)

STATE TRANSITION C

STOP STATE

# FIG. 4

16

151 ADMINISTRATOR
AUTHENTICATION
CONDITION: SATISFIED

PERMITTED USER
AUTHENTICATION
CONDITION: SATISFIED

17

AUTHENTICATION
RESULT 152

AUTHENTICATION
RESULT 153

AUTHENTICATION
RESULT 154

# FIG. 5

152

STATE TRANSITION
REQUEST: PRESENT

VEHICLE-RELATED
CONDITION 1: SATISFIED

VEHICLE-RELATED
CONDITION 2: SATISFIED

VEHICLE-RELATED
CONDITION 3: SATISFIED

VEHICLE-RELATED
CONDITION 4: SATISFIED

VEHICLE-RELATED
CONDITION 5: SATISFIED

VEHICLE-RELATED
CONDITION 6: SATISFIED

VEHICLE-RELATED
CONDITION 7: SATISFIED

AUTHENTICATION
RESULT: PRESENT

VEHICLE: NORMAL

17

151

PERMISSION IN
STATE
TRANSITION A
AND STATE
TRANSITION B

13

## FIG. 6

```
                                    ┌─153
              ┌─151    ┌──────────────────────────┐
              │        │   ABNORMALITY            │
              │        │   DETERMINATION          │    PERMISSION IN      ┌─13
              │   ────►│ CONDITION: SATISFIED     │      STATE       ────►│
              │        │                          │   TRANSITION C        │
              └────    │ CUT-OFF DETERMINATION    │                   └────
                       │ CONDITION: SATISFIED     │
                       │                          │
                       │   AUTHENTICATION         │
                       │ RESULT: PRESENT          │
                       │                          │
                       │ VEHICLE: ABNORMAL        │
                       └──────────────────────────┘
```

## FIG. 7

```
                                      ┌─154
                       ┌──────────────────────────┐
                       │   RETURN REQUEST:        │
                       │     PRESENT              │
                       │                          │
                       │   VEHICLE-RELATED        │
                       │ CONDITION 1: SATISFIED   │
                       │                          │
                       │   VEHICLE-RELATED        │
          ┌─17         │ CONDITION 2: SATISFIED   │
          │            │                          │
          │            │   VEHICLE-RELATED        │
          │    ───────►│ CONDITION 3: SATISFIED   │
          │            │                          │
          └───         │   VEHICLE-RELATED        │    PERMISSION IN      ┌─13
                       │ CONDITION 4: SATISFIED   │      STATE       ────►│
                       │                          │   TRANSITION D        │
                       │   VEHICLE-RELATED        │                   └────
          ┌─151        │ CONDITION 5: SATISFIED   │
          │            │                          │
          │            │   VEHICLE-RELATED        │
          │    ───────►│ CONDITION 6: SATISFIED   │
          │            │                          │
          └───         │   VEHICLE-RELATED        │
                       │ CONDITION 7: SATISFIED   │
                       │                          │
                       │   AUTHENTICATION         │
                       │ RESULT: PRESENT          │
                       │                          │
                       │ VEHICLE: NORMAL          │
                       └──────────────────────────┘
```

Europäisches
Patentamt

European
Patent Office

Office européen
des brevets

## EUROPEAN SEARCH REPORT

**Application Number**

EP 25 15 2775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 816 017 A1 (BYD CO LTD [CN]) 5 May 2021 (2021-05-05) * paragraphs [0017] - [0130], [0407] - [0427]; figures 1-13,22 * | 1-15 | INV. B62D5/00 B62D1/22 B62D5/04 B62D6/00 A63F13/803 B60W50/08 |
| X | EP 4 213 132 A1 (THYSSENKRUPP PRESTA AG [LI]; THYSSENKRUPP AG [DE]) 19 July 2023 (2023-07-19) * the whole document * | 1-8, 12-15 | |
| A | US 2022/379738 A1 (JIAN HU [CN]) 1 December 2022 (2022-12-01) * paragraphs [0001] - [0005], [0012], [0013], [0025] - [0031]; figures 1,2 * | 1-15 | |
| A | JP 2014 119657 A (AUTO NETWORK GIJUTSU KENKYUSHO; SUMITOMO WIRING SYSTEMS ET AL.) 30 June 2014 (2014-06-30) * figures 1,3,4 * | 1-15 | |

**TECHNICAL FIELDS SEARCHED (IPC)**

B62D
A63F
B60W

The present search report has been drawn up for all claims

| Place of search | Date of completion of the search | Examiner |
|---|---|---|
| Munich | 3 June 2025 | Wurzer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 592 163 A1

## ANNEX TO THE EUROPEAN SEARCH REPORT
## ON EUROPEAN PATENT APPLICATION NO.

EP 25 15 2775

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | | Publication date | Patent family member(s) | | Publication date |
|---|---|---|---|---|---|
| EP 3816017 | A1 | 05-05-2021 | CN | 110654457 A | 07-01-2020 |
| | | | EP | 3816017 A1 | 05-05-2021 |
| | | | ES | 2992310 T3 | 11-12-2024 |
| | | | US | 2021221434 A1 | 22-07-2021 |
| | | | US | 2024300578 A1 | 12-09-2024 |
| | | | WO | 2020001590 A1 | 02-01-2020 |
| EP 4213132 | A1 | 19-07-2023 | NONE | | |
| US 2022379738 | A1 | 01-12-2022 | CN | 113085994 A | 09-07-2021 |
| | | | EP | 4095824 A1 | 30-11-2022 |
| | | | US | 2022379738 A1 | 01-12-2022 |
| JP 2014119657 | A | 30-06-2014 | JP | 6051836 B2 | 27-12-2016 |
| | | | JP | 2014119657 A | 30-06-2014 |

EPO FORM P0459

For more details about this annex : see Official Journal of the European Patent Office, No. 12/82

**EP 4 592 163 A1**

**Patent documents cited in the description**

- JP 2007330312 A